# EUROPÄISCHE PATENTSCHRIFT

(11) **EP 1 650 445 B1**
(45) Veröffentlichungstag und Bekanntmachung des Hinweises auf die Patenterteilung: **13.06.2007**
(21) Anmeldenummer: 05026927.3
(22) Anmeldetag: 11.04.2003
(51) Int. Cl.: F16B 13/04, E04F 13/08

(54) **Isolierplattennagel**
Attachment device for insulating panels
Dispositif de fixation pour panneaux isolants

(30) Priorität: 24.04.2002 CH 6992002; 20.08.2002 CH 14182002
(43) Veröffentlichungstag der Anmeldung: 26.04.2006
(62) Teilanmeldung aus: 03405251.4
(73) Patentinhaber: MUNGO BEFESTIGUNGSTECHNIK AG, CH-4603 Olten (CH)
(72) Erfinder: Bappert, Adolf, 4616 Kappel (CH)
(74) Vertreter: Quehl, Horst Max

(56) Entgegenhaltungen:
- DE-U- 7 913 125
- DE-U- 29 504 565

## Beschreibung

Die Erfindung betrifft einen Isolierplattennagel aus Kunststoff, mit einem flanschartigen Haltekopf am hinteren Ende des Nagelschaftes und einem zur Anordnung im Wandmaterial einer Bauwerkswand bestimmten Klemmbereich.

Ein Isolierplattennagel ist beispielsweise bekannt durch die EP 0 086 452. Der Erfindung liegt die Aufgabe zugrunde, einen Isolierplattennagel zu finden, der einfach und damit preisgünstig herstellbar ist und eine verbesserte Verankerung im festen Wandmaterial gewährleistet, auch wenn dieses eine unregelmäßige innere Struktur z.B. mit Hohlkammern aufweist. Die Lösung dieser Aufgabe erfolgt erfindungsgemäß aufgrund der Merkmale des Patentansprüchs 1. Bevorzugte Ausführungsformen der Erfindung sind Gegenstand der abhängigen Patentansprüche und der folgenden Beschreibung anhand der Zeichnungen zu entnehmen. Es zeigt:
Fig.1 in perspektivischer Darstellung einen Ausschnitt aus einer Bauwerkswand im Bereich einer Aufnahmebohrung und einem Werkzeug nach teilweiser Entfernung aus dem Aufnahmeloch,
Fig.2 eine Darstellung entsprechend Fig.1 mit einem in das Aufnahmeloch nach Fig.1 eingesetzten Isolierplattennagel gemäss einem ersten Ausführungsbeispiel der Erfindung,
Fig.3 den Isolierplattennagel nach Fig.2 in einer Seitenansicht,
Fig.4 den Isolierplattennagel nach Fig.2 oder 3 im Längsschnitt senkrecht zur Abbildungsebene der Fig.3,
Fig.5 einen Querschnitt entlang der Linie V-V der Fig.4,
Fig.6 eine perspektivische Darstellung des Isolierplattennagels nach Fig.4 vor seiner Verbindung mit seiner Isoliermaterialrondelle,
Fig.7 eine perspektivische Darstellung eines Isolierplattennagels gemäss einem zweiten Ausführungsbeispiel der Erfindung,
Fig.8 einen vergrößerten Querschnitt des Isolierplattennagels nach Fig.7 in dessen mit VIII bezeichneten Bereich,
Fig.9 eine perspektivische Darstellung eines unvollständig in eine Aufnahmebohrung eingeschobenen Isolierplattennagel nach Fig.7,
Fig.10 eine Darstellung entsprechend Fig.10 nach vollständigem Einsetzen des Isolierplattennagels nach Fig.7,
Fig.11 eine Seitenansicht eines Isolierplattennagels gemäss einem dritten Ausführungsbeispiel der Erfindung,
Fig.12 einen Längsschnitt durch einen Isolierplattennagel gemäss einem vierten Ausführungsbeispiel der Erfindung,
Fig.13 einen Querschnitt entlang der Linie XIII -XIII der Fig.12,
Fig.14 eine perspektivische Darstellung eines unvollständig in eine Aufnahmebohrung eingeschobenen Isolierplattennagels gemäss einem fünften Ausführungsbeispiel ,
Fig.15 eine Darstellung entsprechend Fig. 14 nach vollständigem Einsetzen des Isolierplattennagels,
Fig.16 einen Längsschnitt durch den Isolierplattennagel nach Fig.14 oder 15 und
Fig.17 eine perspektivische Darstellung des Isolierplattennagels nach Fig.16,
Fig.18 eine perspektivische Darstellung einer sechsten Ausführungsform eines erfindungsgemäßen Isolierplattennagels,
Fig.19 eine Seitenansicht des Isolierplattennagels nach Fig.18,
Fig.20 eine Seitenansicht des Ankerbereichs des Isolierplattennagels nach Fig.18,
Fig.21 eine perspektivische Darstellung einer siebten Ausführungsform eines erfindungsgemäßen Isolierplattennagels,
Fig.22 eine Seitenansicht des Isolierplattennagels nach Fig.21 und
Fig.23 einen Querschnitt durch den Ankerbereich des Isolierplattennagels nach Fig.21.

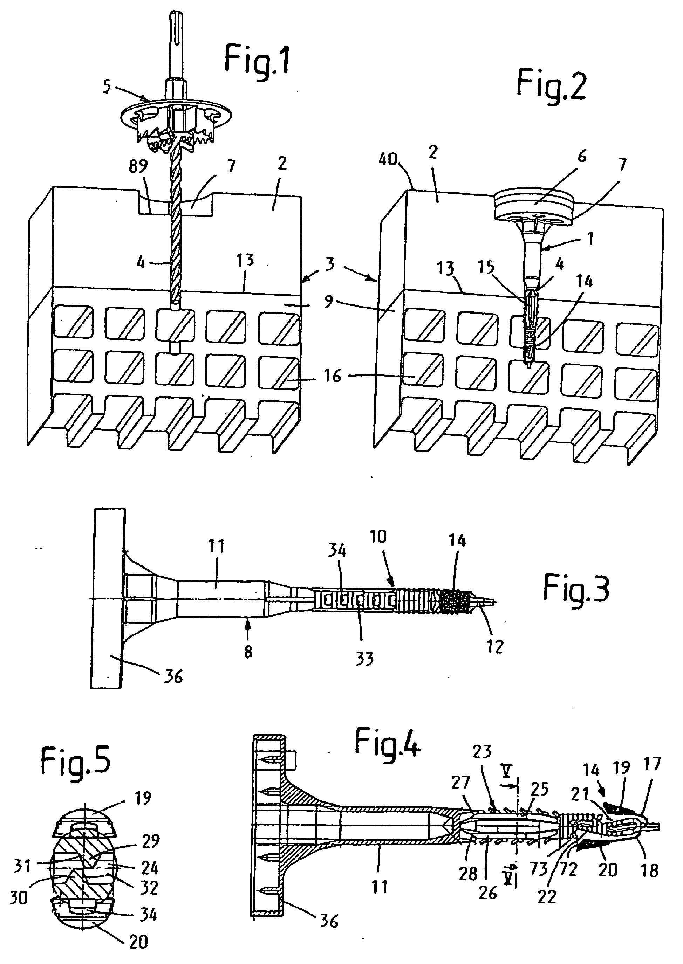

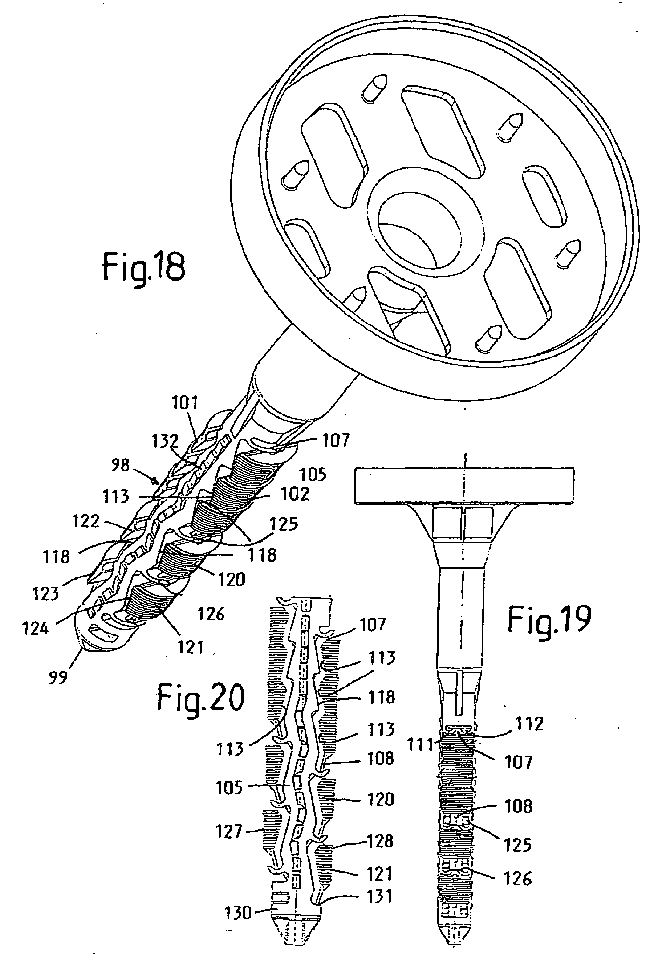

Wie die Darstellungen der Fig. 1 und 2 veranschaulichen, wird zum Einbringen eines Isolierplattennagels 1 in einer durch eine Isoliermaterialplatte 2 verkleideten Bauwerkswand 3 vorerst eine abgestufte Aufnahmebohrung 4 mittels eines Werkzeuges 5 in einem Arbeitsgang hergestellt, das im Späteren anhand der Fig.18 bis 20 näher beschrieben wird. Die Aufnahmebohrung 4 erstreckt sich von dem für die Aufnahme des flanschartigen Haltekopfes 6 vorgesehenen, äußeren Senkloch 7 mit gleichem Durchmesser von z.B. 10 mm mit einer für die Aufnahme des Nagelschaftes 8 ausreichenden Länge, die dem Dickenmaß der Isoliermaterialplatte 2 und einer für die Verankerung im festen Wandmaterial 9 erforderlichen Bohrtiefe entspricht.

Der Nagelschaft 8 hat einen für die klemmende Verankerung im festen Wandmaterial 9 ausgeführten Ankerbereich 10, an den sich ein für die Aufnahme im Isoliermaterial vorgesehener Halteschaftteil 11 anschließt. Dieser hat einen Durchmesser bzw. eine größte Quererstreckung, die etwas größer ist als der Bohrungsdurchmesser der Aufnahmebohrung 4 im betreffenden Bereich, so dass er beim Eindrücken in die Aufnahmebohrung mit elastischer Vorspannung im Material der Isoliermaterialplatte 2 eingeschlossen ist. Die Länge des Halteschaftteiles 11 ist der Dicke der Isoliermaterialplatte 2 derart angepasst, dass der sich anschließende Ankerbereich 10 des Nagelschaftes 8 sich vom vorderen Nagelende 12 mindestens bis zu der z.B. eine Klebeschicht aufweisenden Trennebene 13 zwischen dem ihn aufnehmenden, festen Wandmaterial 9 und der Isoliermaterialplatte 2 erstreckt und beispielsweise entsprechend dem dargestellten Ausführungsbeispiel diese auch überbrückt. Um diese Länge des Ankerbereiches 10 zu gewährleisten, hat dieser zusätzlich zu seinen vorderseitigen Ankermitteln 14 einen sich an diese anschließenden Klemmbereich 15. Dieser gewährleistet eine sichere Verankerung des Isolierplattennagels 1 und damit der Isoliermaterialplatte 2 im Bereich des festen Wandmaterials 9, auch wenn dieses größere Hohlkammern 16 aufweist, wie sie an Hohlbausteinen anzutreffen sind, denn im Bereich der Außenfläche des festen Wandmaterials 9 ist in jedem Fall kompaktes Material vorhanden.

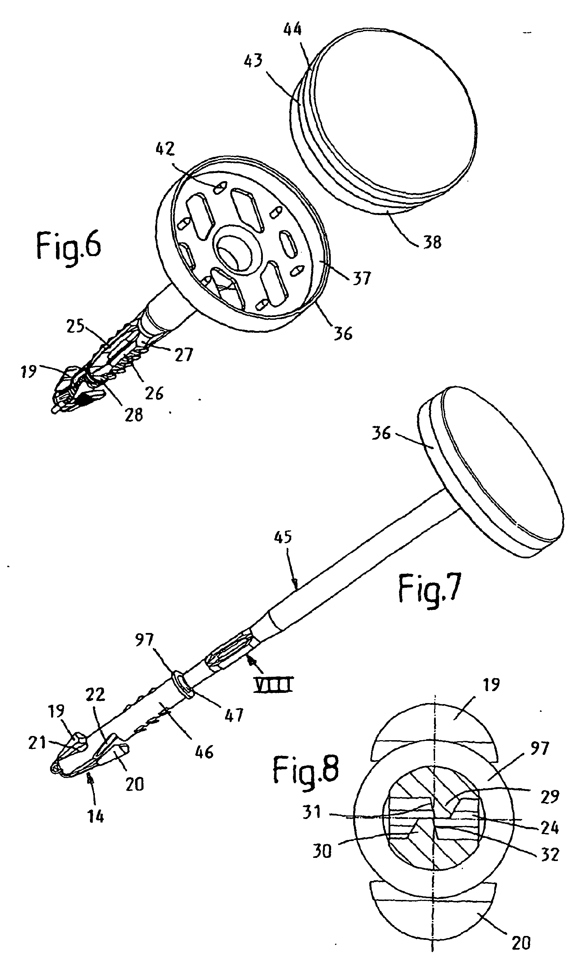

Die vorderseitigen Ankermittel 14 sind bei den Ausführungsbeispielen der Fig. 2 bis 17 gleichartig ausgebildet und haben mindestens ein über ein Bandteil 17,18 am Nagelschaft gehaltenes Keilelement 19,20, das in Eingriffskontakt an einer Keilfläche 21,22 des Nagelschaftes 8 anliegt. Bei mehreren derartigen Keilelementen 19,20 sind diese auf zwei diametral einander gegenüberliegenden Seiten des Nagelschaftes 8 vorgesehen und in Längsrichtung zueinander versetzt. Am Isolierplattennagel 1 wirkende Zugkräfte bewirken somit in der Aufnahmebohrung 4 eine Keilverspannung im Bereich ihrer Anordnung.

Ankermittel mit einer vergleichbaren Keilwirkung sind an sich u.a. bekannt durch die DE 4312339. Bei einem Isolierplattennagel 1 gemäss der vorliegenden Erfindung ergibt sich die für eine spielfreie Verankerung des Isolierplattennagels 1 erforderliche Verspannung der Keilelemente aufgrund der Elastizität der Isoliermaterialplatte 2, indem diese beim Einpressen des Isolierplattennagels elastisch etwas zusammengedrückt wird und anschließend durch Rückfederung auf den Isolierplattennagel 1 eine für seine Verspannung geeignete Zugkraft ausübt.

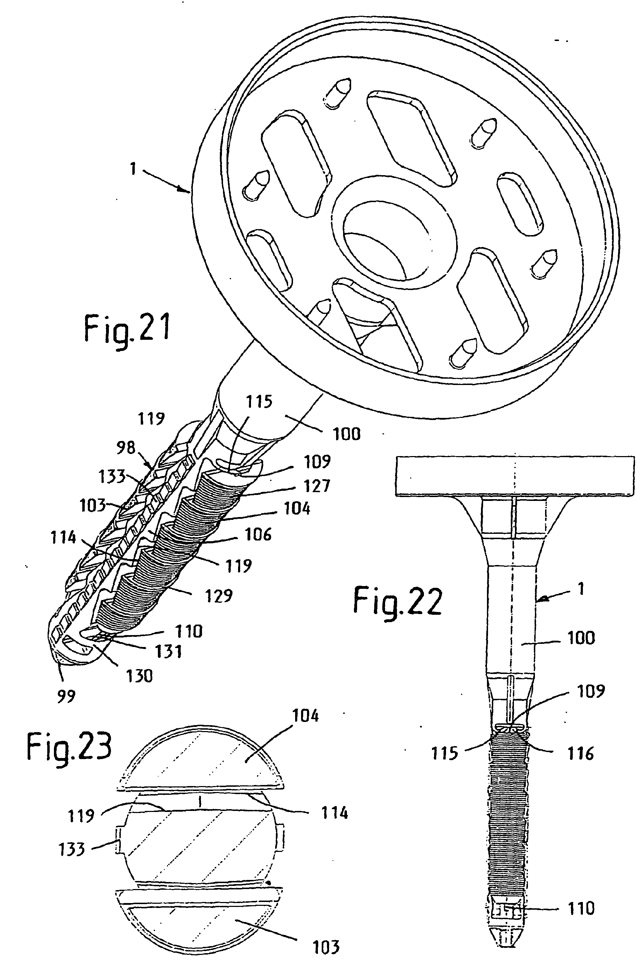

Vorzugsweise hat die gegen die Bohrungsfläche zur Anlage kommende Außenfläche der Keilelemente 19,20 eine den Eingriff verbessernde, z.B. aus zahlreichen in Umfangsrichtung des Plattennagels 1 verlaufenden Rippen bestehende Feinprofilierung, wie sie im Ausführungsbeispiel der Fig. 20 und 21 zu sehen ist.

Der sich an die vorderseitigen Ankermittel anschließende Klemmbereich 15 ist beim Ausführungsbeispiel der Fig. 2 bis 13 durch eine elastisch zusammendrückbare Schafterweiterung 23 gebildet, die zwei diametral zueinander angeordnete, brückenartig voneinander weg gewölbte, zwischen sich eine Ausnehmung 24 einschließende Stegteile 25,26 aufweist. Die brückenartigen Stegteile 25,26 gehen über zwei in axialer Richtung entgegengesetzt angeordnete, konisch abgeschrägte Endbereiche 27,28 zu einem zylindrisch ausgeführten Bereich des Nagelschaftes über, dessen Durchmesser mindestens angenähert demjenigen der Aufnahmebohrung 4 entspricht. Beim Eindrücken des Isolierplattennagels 1 in die Aufnahmebohrung 4 wird folglich die Schafterweiterung zusammengedrückt, so dass in der Schaftausnehmung 24 vorgesehene, diametral zueinander angeordnete, zahnartige Nockenteile 29,30 mit ihrer Schrägfläche 31,32 in gegenseitigen Kontakt gelangen und eine Querspreizung der Stegteile 25,26 verursachen. Diese trägt zur verbesserten Verankerung des Isolierplattennagels 1 im festen Wandmaterial 9 in der Nähe der Trennebene 13 bei. Vorzugsweise ist an der Außenseite dieser Stegteile 25,26 eine die Verankerung mit der Innenfläche der Aufnahmebohrung 4 verbessernde Profilierung 33 vorgesehen, die z.B. durch in Reihe angeordnete Schrägzähne 34 gebildet ist. Ein solcher Klemmbereich 15 gewährleistet aufgrund seiner Anordnung in der Nähe der Trennebene 13 eine spielfreie Befestigung einer Isolierplatte 2 auch dann, wenn die vorderseitigen Ankermittel 14 aufgrund der Struktur des festen Wandmaterials 9 an einem Hohlraum 16 angeordnet sind, an dem ihre Keilelemente 19,20 nicht wirksam werden können.

Für die Halterung der Isolierplatte 2 an der mit der Trennebene 13 gleichlaufenden Außenfläche des festen Wandmaterials 9, hat der Isolierplattennagel 1 an seinem hinteren Ende flanschartig einen tellerförmigen Haltekopf 35, der in dem Senkloch 7 der Isolierplatte 2 eingeschlossen ist. Der Haltekopf 35 hat einen vorzugsweise einstückig am Nagelschaft 8 angeformten Halteteller 36, dessen von einem umlaufenden Rand 37 begrenzter Hohlraum eine Fassung für den unteren, zylindrischen Bereich 38 einer Rondelle 39 aus Isoliermaterial bildet. Diese gewährleistet an der Außenfläche 40 der isolierten Bauwerkswand 3 einheitliche physikalische Eigenschaften. Zusätzlich zu einem für die Rondelle 39 vorgesehener Presssitz in dem Halteteller 36 sind für ihre Befestigung an dessen Bodenwand 41 mehrere spitz endende Haftstifte 42 vorgesehen, die sich beim Eindrücken der Rondelle 39 in deren relativ weiches Material eingraben. Angrenzend an den zylindrischen, zum Einschluss in dem Halteteller 36 vorgesehenen Bereich 38 geht die Rondelle 39 über einen konischen Zwischenbereich 43 in einen äußeren zylindrischen Bereich 44 über, dessen Durchmesser etwas größer ist als derjenige des Senkloches 7 der Isolierplatte 2, so dass die Rondelle 39 einen festen Sitz erhält. In der Bodenwand 41 vorgesehene Aussparungen 34 dienen der Verringerung des Materialaufwandes bei der Herstellung des Isolierplattennagels in Kunststoff-Spritztechnik.

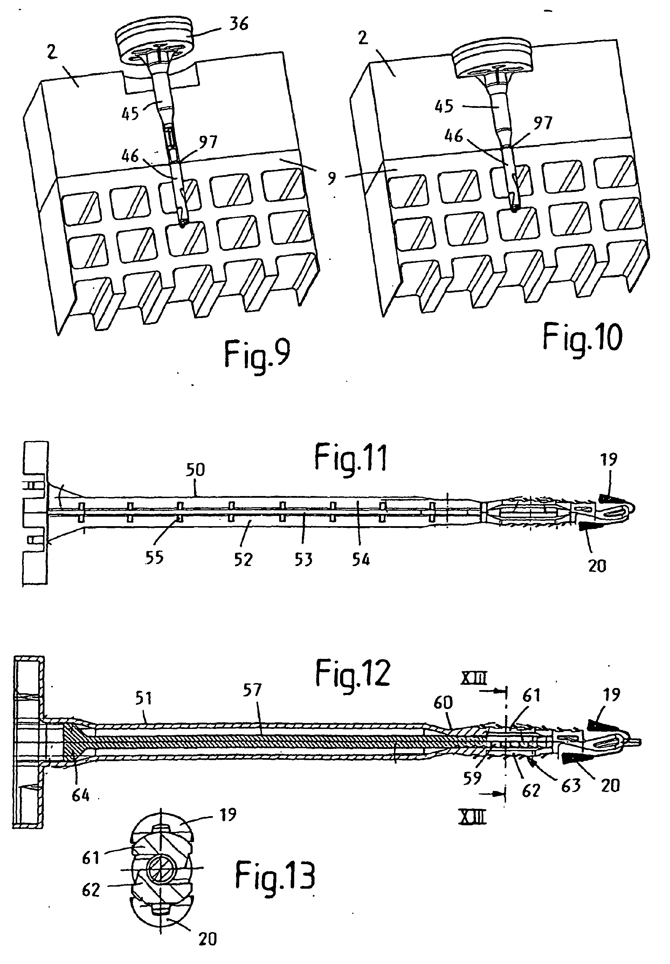

Der Isolierplattennagel des Ausführungsbeispieles nach Fig.7 bis 10 hat einen Nagelschaft 45 mit einem Ankerbereich 46, der über einen als Sollbruchstelle wirkenden, filmartigen, dünnen Wandteil 47 mit einem Halteschaftteil 48 verbunden ist, so dass dieser sich beim Einpressen des Isolierplattennagels in ein Aufnahmeloch 4 teleskopartig in den Ankerbereich 46 einschiebt und darin verklemmt. Fig.9 zeigt den betreffenden Ausgangszustand des Isolierplattennagels, während Fig.10 den Isolierplattennagel in vollständig verankerter Endposition wiedergibt. Für die hierzu erforderliche Klemmverbindung zwischen dem Halteschaftteil 48 und dem Ankerbereich 46 ist an dem Halteschaftteil 48 ein Klemmbereich 49 vorgesehen, der in seiner Ausführung mit dem Klemmbereich 15 der vorderseitigen Ankermittel 14 des Ausführungsbeispieles der Fig.2 -6 vergleichbar ist.

Die Ausführungsbeispiele nach Fig.11 und 12 zeigen zwei Varianten für die Ausführung eines Halteschaftteiles 50 bzw. 51. Der Halteschaftteil 50 nach Fig.11 hat einen kreuzförmigen Querschnitt mit somit vier im Winkel von 90° zueinander angeordneten Längsrippen 52-54, die durch zwischen ihnen angeordnete Winkelteile 55 in Umfangsrichtung miteinander verbunden sind.

Der Halteschaftteil 51 besteht aus einer relativ dünnwandigen Hülse 56 aus Kunststoff, in der zur Erhöhung seiner Biegesteifigkeit ein Stahlstift 57 eingeschlossen ist. Für die Verbindung zwischen beiden ist der Stahlstift 57 an seinem vorderen Endbereich 58 mit einer Profilierung 59 versehen, die von einem verengten Bereich 60 des aus Kunststoff bestehenden Teiles des Nagelschaftes eingeschlossen ist. Außerdem ist der vordere Endbereich 58 zwischen den beiden Stegteilen 61, 62 des Klemmbereichs 63 auf einem Teil seines Umfangs eingeschlossen und entsprechend klemmend umfasst, während der rückseitig vorgesehene Kopf 64 des Stahlstiftes 57 der distanzierten Abstützung des Stahlstiftes 57 an der Innenseite einer kurzen Hülsenerweiterung 65 dient.

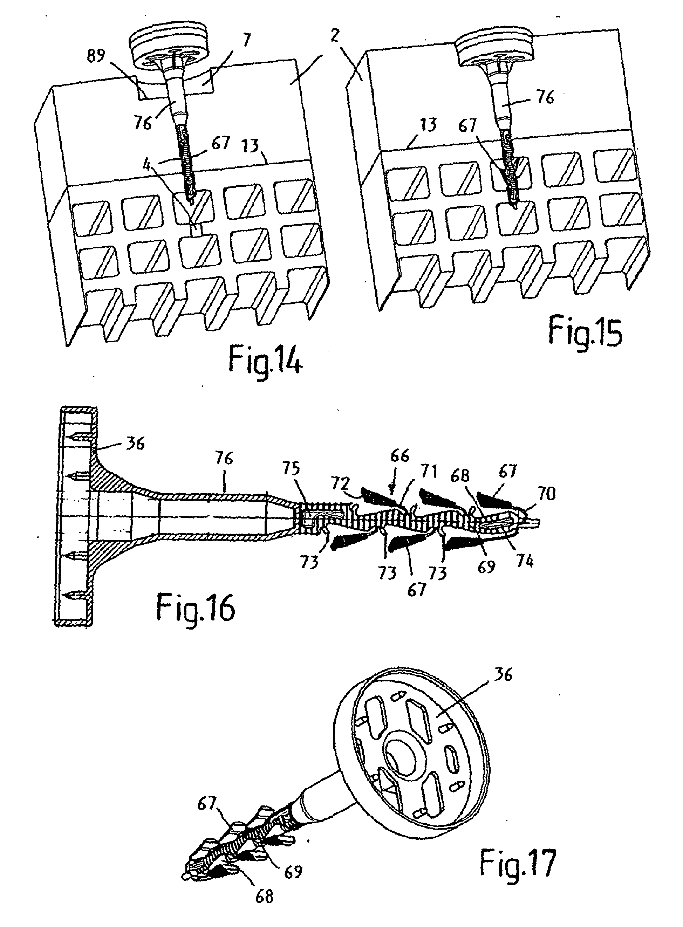

Beim Ausführungsbeispiel nach Fig.14 bis 17 ist der Ankerbereich 66 bis zur Trennebene 13 zwischen dem festen Wandmaterial 9 und der Isolierplatte 2 und entsprechend bis zu einem Halteschaftteil 76 gleichartig ausgebildet, indem tannenzapfenartig mehrere Keilelemente 67 in Schaftlängsrichtung hintereinander, auf diametral einander gegenüberliegenden Schaftseiten und zueinander versetzt vorgesehen sind, mit entsprechend angeordneten, zum Kontakt mit diesen bestimmten Keilflächen 68. Mit ihrem schaftseitigen, dem Ende des Isolierplattennagels zugekehrten Ende sind die Keilelemente 67 jeweils mit dem beidseitig die Keilflächen 68 aufweisenden Schaftteil 69 über ein Bandteil 70,71 derart verbunden, dass sie jeweils einer Keilfläche 68 gegenüberliegend gehalten sind. Beim Einschieben des Isolierplattennagels in die Aufnahmebohrung werden die Keilelemente 67 an die gegenüberliegende Keilfläche 68 geklappt. Dabei gelangt jeweils eine an ihrem äußeren Ende vorgesehene Schrägfläche 72 nockenartig in Kontakt mit einem elastisch ausbiegbaren Nockenfortsatz 73 des Schaftteiles 69, so dass auf die Keilelemente 67 eine Axialkraft ausgeübt wird, durch die sie unter Vorspannung in den Keilspalt zwischen der Wand der Aufnahmebohrung 4 und der angrenzenden Keilfläche 68 gedrückt werden. Die im Schaftteil 69 vorgesehenen, inneren Aussparungen 74,75 bewirken eine Einsparung an Kunststoffmaterial. Außerdem kann die Aussparung 75 am hinteren Bereich des Schaftteiles 69 zur federelastischen Auslenkung eines an sie angrenzend angeordneten Nockenfortsatzes 73 beitragen.

Die Ausführungsbeispiele der Fig.18 bis 23 ebenso wie dasjenige der Fig. 14 bis 17 unterscheiden sich von denen der Fig. 2 bis 6 und 11 bis 13 u.a. dadurch, dass vorderseitige Ankermittel gleichartig wie der sich anschließende Klemmbereich ausgeführt sind und in diesen übergehen, so dass sich der Ankerbereich 98 von der Nagelspitze 99 bis zum Halteschaftteil 100 erstreckt.

Bei den Ausführungsbeispielen der Fig. 18 bis 23 sind zwei sich jeweils über einen größeren Teil des Ankerbereichs 98 erstreckende, äußere Klemmelemente 101, 102 bzw. 103,104 beidseitig zu einem zentralen Schaftbereich 105 bzw. 106 angeordnet und nur an ihren Enden jeweils über Stegteile 107,108 bzw. 109,110 mit dem zentralen Schaftbereich 105 bzw. 106 elastisch verbunden. Die Klemmwirkung der somit langgestreckten Klemmelemente 101,102 bzw. 103,104 ergibt sich durch eine zahnreihenförmige Anordnung von Keilflächen 113 bzw. 114 an der Innenseite der Klemmelemente 100,101 bzw. 103,104, die an entsprechend zahnreihenförmig verlaufenden Keilflächen 118 bzw. 119 an beiden Seiten des zentralen Schaftbereiches 105 bzw. 106 anliegen. Um einer seitlichen Verschiebung dieser Keilflächen 113 bzw. 114 und 118 bzw. 119 relativ zueinander entgegen zu wirken, haben diese vorzugsweise einen symmetrischen, flach v-förmigen Querschnitt, wie in der Querschnittsdarstellung der Fig.23 zu erkennen ist, oder sie sind jeweils einerseits flach konkav und andererseits entsprechend flach konvex symmetrisch gekrümmt.

Durch die bereits beschriebene Rückfederung des Nagelschaftes und damit seines zentralen Schaftbereiches 105 bzw. 106 aufgrund der Elastizität der Isolierplatte 2 und/oder aufgrund von Kräften, die bestrebt sind, die Isolierplatte 2 vom festen Wandmaterial 9 zu lösen, bewegt sich der zentrale Schaftbereich 105 bzw. 106 nach außen bzw. in der Darstellung der Fig.20 nach oben, so dass die an der Innenfläche der Aufnahmebohrung 4 in Ankerkontakt stehenden, langgestreckten Klemmelemente 101,102 bzw. 103,104 durch die Keilwirkung der Reihen von Keilflächen 113 bzw. 114 und 118 bzw. 119 radial nach außen gepresst werden und sich der Ankerkontakt entsprechend verstärkt.

Wie bereits an Hand des Ausführungsbeispieles nach Fig.16 beschrieben, dienen elastisch ausbiegbare Nockenfortsätze 111,112 bzw. 115,116 dazu, auf die Klemmelemente 101,102 bzw. 103,104 eine Axialkraft auszuüben, um deren Wirkung zu unterstützen. Beim Einschieben des Isolierplattennagels 1 in eine Aufnahmebohrung 4 bewegen Reibungskräfte an den Klemmelementen 101,102 bzw. 103,104 diese in Richtung auf die Nockenfortsätze 111,112 bzw. 115,116 nach hinten und damit von einem Keileingriff mit den Keilflächen 118 bzw. 119 des zentralen Schaftbereiches 105 bzw. 106 weg, so dass die Nockenfortsätze 111,112 bzw. 115,116 vorgespannt werden, um die Klemmelemente 101,102 bzw. 103,104 nach vollständigem Einschieben des Isolierplattennagels 1 in die Aufnahmebohrung 4 in Keileingriff zu drücken, der durch die erwähnte Rückfederung des zentralen Schaftbereiches 105 bzw. 106 verstärkt wird.

Das Ausführungsbeispiel nach Fig.18 bis 20 hat zusätzlich zu den beiden langgestreckten, mehrere innere Keilflächen 113 aufweisenden Klemmelementen 101,102 weitere Klemmelemente 120 bis 123 mit jeweils nur einer inneren Keilfläche 124, wie es auch z.B. das Ausführungsbeispiel nach Fig.16 zeigt, so dass an den zusätzlichen Klemmelementen 120 bis 123 weitere Nockenfortsätze 125, 126 vorhanden sind. Die somit vorhandenen Aussparungen zwischen aufeinander folgenden Klemmelementen können bei der Anpassung an eine unregelmäßige Innenfläche der Aufnahmebohrung 4 von Vorteil sein.

Für eine gute Haftung der Klemmelemente 101,102 und 120 bis 123 bzw. 103, 104 an der Innenfläche der Aufnahmebohrung 4 haben diese eine äußere Feinprofilierung, die aus zahlreichen, in Umfangsrichtung des Isolierplattennagels verlaufenden Rippen 127 besteht. Ihr Profilquerschnitt ist sägezahnförmig. Für eine weitere Verbesserung des Hafteingriffs sind jeweils z.B. die beiden an der Hinterkante der Klemmelemente 101,102 und 120 bis 123 bzw. 103, 104 verlaufenden Rippen 128 bzw. 129 mit einem etwas größeren Durchmesser versehen, so dass sie nach außen überstehen.

Weiterhin sind die jeweils einer Keilfläche 113 bzw. 114 zuzuordnenden, aufeinander folgenden Bereiche der Klemmelemente 101,102 und 120 bis 123 bzw. 103, 104 mit einem z.B. um jeweils wenige zehntel Millimeter gering abgestuften, auf den Isolierplattennagel 1 bezogenen Durchmesser versehen, so dass der Ankerbereich 98 des Isolierplattennagels 1 sich in Richtung zur Nagelspitze 99 leicht verjüngt. Dies erleichtert das Einschieben in eine Aufnahmebohrung 4 mit anschließender fester Verklemmung mit der Bohrungswand.

Um zu verhindern, dass beim Einschieben des Isolierplattennagels in eine unregelmäßige Aufnahmebohrung 4 sich die nur über elastische Stege z.B. 107,108 bzw. 109,110 gehaltenen Klemmelemente unkontrolliert vom zentralen Schaftbereich 105 bzw. 106 ablösen, bildet ein angrenzend an die Nagelspitze 99 vorgesehener, ringförmig umlaufender Randbereich 130 eine Schutzwand 131, so dass sich die beiden vordersten Klemmelemente 121,123 nach Fig.18 bzw. die Klemmelemente 103,104 nach Fig. 21 in Einschieberichtung hinter dieser Schutzwand 131 befinden und ihr Einhaken an der Kante eines Hohlraumes im festen Wandmaterial 9 verhindert wird.

Weiterhin haben die Isolierplattennägel der Ausführungsbeispiele der Fig. 18 und 21 an ihrem zentralen Schaftbereich 105 bzw. 106, in Anordnung zu den Klemmelementen 101,102 und 120 bis 123 bzw. 103,104 in Nagelumfangsrichtung um 90 Grad versetzt, eine sägezahnartige Reihe von Eingriffszähnen 132 bzw. 133, die zur Verankerung in der Aufnahmebohrung 4 beitragen.

## Patentansprüche

1. Isolierplattennagel aus Kunststoff, mit einem flanschartigen Haltekopf (6) am hinteren Ende des Nagelschaftes (8) und einem zur Anordnung im Wandmaterial (9) einer Bauwerkswand bestimmten Klemmbereich (14, 15, 98), **dadurch gekennzeichnet, dass** vorderseitige Ankermittel (14) in Längsrichtung des Nagels zueinander versetzt auf diametral einander gegenüberliegenden Seiten des Isolierplattennagels (1) mindestens zwei Keilelemente (19,20) aufweisen, die über Bandteile (17,18) mit dem Nagelschaft (8) verbunden sind und die zu Keilflächen (21,22) des Nagelschaftes (8) gegenüberliegend angeordnet sind.

2. Isolierplattennagel nach Anspruch 1, **dadurch gekennzeichnet, dass** die Keilelemente (67) mit zugeordneten Keilflächen (68) sich reihenförmig bis zu einem zur Aufnahme in der Isolierplatte (2) bestimmten Halteschaftteil (76) erstrecken.

3. Isolierplattennagel nach Anspruch 1, **dadurch gekennzeichnet, dass** der Klemmbereich (98) mindestens zwei diametral zueinander sich axial erstreckende, einen zentralen Schaftbereich (105,106) zwischen sich einschließende und an ihren Enden mit diesem über elastische Stege (107,108;109,110) verbundene Klemmelemente (101,102; 120-123) aufweist, wobei aneinander anliegende Flächen der Klemmelemente und des Schaftbereiches sägezahnartig aufeinander folgende Keilflächen (113,114,118,119,124) aufweisen.

4. Isolierplattennagel nach Anspruch 1, **dadurch gekennzeichnet, dass** die Keilelemente (19,20,67) oder Klemmelemente (101-104,120-123) an ihrem äußeren Ende jeweils eine Endfläche (72) aufweisen, die zum nockenartigen, eine Axialkraft am zugeordneten Keil- oder Klemmelement (19,20,67, 101-104, 120-123) verursachenden Kontakt mit einem elastisch ausbiegbaren Nockenfortsatz (73,111,112;115,116) des Schaftteiles (69) oder zentralen Schaftbereiches (105,106) bestimmt ist.

5. Isolierplattennagel nach einem der Ansprüche 1 bis 4, **dadurch gekennzeichnet, dass** die Außenfläche der Keilelemente (19,20,67,120,121) oder der Klemmelemente (101,102; 103,104) eine aus Querrippen (127-129) bestehende Feinprofilierung aufweist.

6. Isolierplattennagel nach Anspruch 5, **dadurch gekennzeichnet, dass** einige (128,129) der Querrippen diametral über die Mehrzahl der anderen hinausragen.

7. Isolierplattendübel nach einem der Anspruch 3 **dadurch gekennzeichnet, dass** der Durchmesser des Klemmbereichs (98) in Richtung zum Nagelkopf (36) über abgestufte Bereiche zunimmt.

8. Isolierplattendübel nach einem der Ansprüche 1 bis 7, **dadurch gekennzeichnet, dass** ein Randbereich (130) der Nagelspitze (99) für die vordersten Klemmelemente (121,123) eine Schutzwand bildet.

9. Isolierplattennagel nach einem der Ansprüche 1 bis 8, **dadurch gekennzeichnet, dass** die Keilflächen (113,114,124) der Keil- oder Klemmelemente (19,20,101,102,120-123) und die ihnen gegenüberliegenden Keilflächen (68, 118,119) von einer Symmetrielinie aus flach abgeschrägt oder bogenförmig verlaufen, so dass sie sich gegenseitig zu der Symmetrielinie hin zentrieren.

10. Isolierplattennagel nach Anspruch 1, **dadurch gekennzeichnet, dass** ein die vorderseitigen Ankermittel (14) aufweisender Ankerbereich (46) des Nagelschaftes (45) dübelartig einen Hülsenteil mit Klemmmitteln aufweist, der durch einen zur Anlage in der Trennebene (13) zwischen dem Wandmaterial (9) und einer Isolierplatte (2) bestimmten Flansch (97) begrenzt ist und der über einen als Sollbruchbereich ausgebildeten, dünnen Wandteil (47) mit einem Halteschaftteil (48) des Nagelschaftes (45) verbunden ist, so dass der Halteschaftteil (48) beim Einsetzen des Isolierplattennagels (1) in eine Aufnahmebohrung (4) teleskopartig in den Ankerbereich (46) einschiebbar ist, wobei an dem zum Eindringen in den dübelartigen Ankerbereich (46) des Nagelschaftes (45) bestimmter Teil des Halteschaftteiles (48) einen durch eine Schafterweiterung gebildeten Klemmbereich aufweist.

11. Isolierplattennagel nach Anspruch 1, **dadurch gekennzeichnet, dass** der Nagelschaft (51,63) einen sich entlang seiner Achse erstreckenden Stahlstift (57) einschließt.

12. Isolierplattennagel nach Anspruch 1, **dadurch gekennzeichnet, dass** der Klemmbereich (15) eine Schafterweiterung (23) aufweist, die durch zwei diametral zueinander angeordnete, brückenartig voneinander weg gewölbte, in Schaftlängsrichtung verlaufende Stegteile (25,26) gebildet ist, so dass sie zwischen sich eine innere Schaftausnehmung (24) einschließen.

13. Isolierplattennagel nach Anspruch 12, **dadurch gekennzeichnet, dass** in die innere Schaftausnehmung (24), diametral zueinander, zahnartige Nockenteile (29,30) mit mindestens einer Schrägfläche (31,32) hineinragen, die für den gegenseitigen, eine Querspreizung des Klemmbereiches (15) auslösenden Kontakt bestimmt sind.

## Claims

1. Insulation plate nail out of plastic with a flange-like clamping head (6) at the rear end of the nail shank (8) and a clamping region (14, 15, 98) determined for the arrangement in the wall material (9) of a building wall **characterised in that** the front anchoring means (14) has minimum two wedge elements (19,20) in the longitudinal direction of the nail displaced to each other on the sides of the insulation plate nail (1) lying diametrically opposite to each other, which are connected to the nail shank (8) by bonding parts (17,18) and are arranged lying opposite to wedge surfaces (21,22) of the nail shank (8).

2. Insulation plate nail according to claim 1 **characterised in that** the wedge elements (67) with assigned wedge surfaces (68) extend in a row up to a clamping shaft part (76) used for retention in the insulation board (2).

3. Insulation plate nail according to claim 1 **characterised in that** the clamping region (98) has minimum two fixing elements (101,102; 120-123) stretching axially diametric to each other, enclosing a central shaft region (105,106) between them and connected to this at their end via elastic bridges (107,108;109,110), in which surfaces of the fixing elements and the shaft region adjacent to each other have saw-tooth shaped wedge surfaces (113,114,118,119,124) in sequence.

4. Insulation plate nail according to claim 1 **characterised in that** the wedge elements (19,20,67) or fixing elements (101-104,120-123) have an end surface (72) respectively at its outer end, which is fixed for the cam-like contact with a cam extension (73,111,112;115,116) of the shaft part (69) or central shaft region (105,106) that can be bent outwards elastically causing an axial force at the assigned wedge or fixing element (19,20,67, 101-104, 120-123).

5. Insulation plate nail according to one of the claims 1 to 4 **characterised in that** the outer surface of the wedge elements (19,20,67,120,121) or the fixing elements (101,102; 103,104) has a slit consisting of transverse ribs (127-129).

6. Insulation plate nail according to claim 5 **characterised in that** some (128,129) of the transverse ribs project diametrically above a number of others.

7. Insulation plate nail according to claim 3 **characterised in that** the diameter of the clamping region (98) increases in the direction of the nail head (36) over stepped regions.

8. Insulation plate nail according to one of the claims 1 to 7 **characterised in that** a boundary region (130) of the nail point (99) forms a protective wall for the foremost fixing elements (121,123).

9. Insulation plate nail according to one of the claims 1 to 8 **characterised in that** the wedge surfaces (113,114,124) of the wedge or fixing elements (19,20,101,102,120-123) and the wedge surfaces (68, 118,119) opposite to them run inclined flat or arched from a bisecting line so that they centralise themselves mutually to the bisecting line.

10. Insulation plate nail according to claim 1 **characterised in that** an anchoring region (46) of the nail shank (45) having the front anchoring means (14) has a plug-like tubular section with clamping means, which is limited by a flange (97) fixed for the placement in the parting plane (13) between the wall material (9) and an insulation board (2) and is connected to a holding shaft part (48) of the nail shank (45) via a thin wall part (47) formed as predetermined breaking area so that the holding shaft part (48) can be inserted telescope-like in the anchor region (46) for the use of the insulation plate nail (1) in a locating hole (4) which produces a clamp area formed through a shaft extension at the part of the holding shaft part (48) fixed for penetrating in the plug-like anchor region (46) of the nail shank (45).

11. Insulation plate nail according to claim 1 **characterised in that**, the nail shank (51, 63) encloses a steel pin (57) stretching along its axis.

12. Insulation plate nail according to claim 1 **characterised in that** the clamping region (15) has a shaft extension (23), which is formed through two strips (25,26) arranged diametrically to each other, arched bridge-like away from each other, running in the shaft longitudinal direction so that they enclose an inner shaft recess (24) between them.

13. Insulation plate nail according to claim 12 **characterised in that** toothlike cam parts (29,30) project into the inner shaft recess (24), diametrical to each other, with minimum one inclined surface (31,32), which are fixed for the mutual contact triggering a sideways spreading of the clamping region (15).

## Revendications

1. Pointe pour plaque isolante en matière plastique, comprenant une tête de maintien (6) semblable à une bride sur l'extrémité arrière de la tige de pointe (8) et une zone de blocage (14, 15, 98) destinée à l'agencement dans le matériau mural (9) d'un mur d'ouvrage de construction, **caractérisée en ce que** des moyens d'ancrage avant (14) présentent dans la direction longitudinale de la pointe au moins deux éléments cunéiformes (19, 20) décalés l'un par rapport à l'autre sur des côtés diamétralement opposés l'un à l'autre de la pointe pour plaque isolante (1), lesdits éléments cunéiformes étant reliés à la tige de pointe (8) par l'intermédiaire de parties faisant bande (17, 18) et étant agencés à l'opposé de surfaces cunéiformes (21, 22) de la tige de pointe (8).

2. Pointe pour plaque isolante selon la revendication 1, **caractérisée en ce que** les éléments cunéiformes (67) s'étendent avec des surfaces cunéiformes correspondantes (68) en forme de rangée jusqu'à une partie de tige de maintien (76) destinée à la réception dans la plaque isolante (2).

3. Pointe pour plaque isolante selon la revendication 1, **caractérisée en ce que** la zone de blocage (98) présente au moins deux éléments de blocage (101, 102 ; 120 - 123) s'étendant axialement et diamétralement l'un à l'autre, incluant entre eux une région centrale de tige (105, 106) et reliés sur leurs extrémités à celle-ci par des cannelures élastiques (107, 108 ; 109, 110), et dans laquelle les surfaces adjacentes les unes aux autres des éléments de blocage et de la région de tige présentent des surfaces cunéiformes (113, 114, 118, 119, 124) se succédant à la manière de dents de scie.

4. Pointe pour plaque isolante selon la revendication 1, **caractérisée en ce que** les éléments cunéiformes (19, 20, 67) ou les éléments de blocage (101 - 104, 120 - 123) présentent respectivement sur leur extrémité extérieure une surface terminale (72) qui est destinée au contact à la manière d'un mentonnet, lequel provoque une force axiale sur l'élément cunéiforme associé ou l'élément de blocage associé (19, 20, 67, 101 - 104, 120 - 123) avec un prolongement de mentonnet pouvant être fléchi élastiquement (73, 111, 112 ; 115, 116) de la partie de tige (69) ou de la région centrale de tige (105, 106).

5. Pointe pour plaque isolante selon l'une des revendications 1 à 4, **caractérisée en ce que** la surface extérieure des éléments cunéiformes (19, 20, 67, 120, 121) ou des éléments de blocage (101, 102 ; 103, 104) présente un profilage fin constitué de nervures transversales (127 - 129).

6. Pointe pour plaque isolante selon la revendication 5, **caractérisée en ce que** quelques unes (128, 129) des nervures transversales font saille diamétralement au-delà de la pluralité des autres.

7. Pointe pour plaque isolante selon la revendication 3, **caractérisée en ce que** le diamètre de la zone de blocage (98) augmente en direction de la tête de pointe (36) sur des zones échelonnées.

8. Pointe pour plaque isolante selon l'une des revendications 1 à 7, **caractérisée en ce qu'**une zone de bordure (130) du bout pointu de pointe (99) forme une paroi de protection pour les éléments de blocage (121, 123) les plus en avant.

9. Pointe pour plaque isolante selon l'une des revendications 1 à 8, **caractérisée en ce que** les surfaces cunéiformes (113, 114, 124) des éléments cunéiformes ou des éléments de blocage (19, 20, 101, 102, 120 - 123) et les surfaces cunéiformes (68, 118, 119) qui leurs sont opposées sont biseautés à plat depuis une ligne de symétrie ou s'étendent en forme d'arc, de manière à se centrer réciproquement vers la ligne de symétrie.

10. Pointe pour plaque isolante selon la revendication 1, **caractérisée en ce qu'**une région d'ancrage (46) de la tige de pointe (45), laquelle présente le moyen d'ancrage avant (14) présente une partie faisant douille avec des moyens de blocage, à la manière d'une cheville, ladite partie étant limitée par une bride (97) destinée au contact dans le plan de séparation (13) entre le matériau mural (9) et une plaque isolante (2) et étant reliée à une partie de tige de maintien (48) de la tige de pointe (45) par l'intermédiaire d'une partie de paroi mince (47), réalisée comme zone destinée à la rupture, de telle sorte que la partie de tige de maintien (48) peut être poussée à la manière d'un télescope dans la région d'ancrage (46) dans un perçage de réception (4) lorsque la pointe pour plaque isolante (1) est mise en place, et dans laquelle un certain tronçon de la partie de tige de maintien (48), destiné à pénétrer dans la région d'ancrage en forme de cheville (46) de la tige de pointe (45), présente une zone de blocage formée par un élargissement de tige.

11. Pointe pour plaque isolante selon la revendication 1, **caractérisée en ce que** la tige de pointe (51, 63) inclut un clou en acier (57) s'étendant le long de son axe.

12. Pointe pour plaque isolante selon la revendication 1, **caractérisée en ce que** la zone de blocage (15) présente un élargissement de tige (23) qui est formé par deux parties cannelées (25, 26) agencées diamétralement l'une par rapport à l'autre, cintrées l'une à l'écart de l'autre à la manière d'un pont et s'étendant dans la direction longitudinale de la tige, de manière à inclure entre elles un creux intérieur de tige (24).

13. Pointe pour plaque isolante selon la revendication 12, **caractérisée en ce que** des parties de mentonnet semblables à des dents (29, 30) dépassent jusque dans le creux intérieur de tige (24), diamétralement l'une par rapport à l'autre, avec au moins une surface oblique (31, 32), lesdites parties étant destinées au contact réciproque qui déclenche un écartement transversal de la zone de blocage (15).
